# FASCICULE DE BREVET EUROPEEN

(11) **EP 1 196 240 B1**
(45) Date de publication et mention de la délivrance du brevet: **26.07.2006**
(21) Numéro de dépôt: 00922731.5
(22) Date de dépôt: 25.04.2000
(51) Int. Cl.: B01J 20/02, B01J 20/12, B01D 53/72, B01J 20/30

(54) **MATIERE ET PROCEDE POUR LE TRAITEMENT DE MILIEUX GAZEUX CONTENANT DES COMPOSES ORGANIQUES VOLATILS**
MATERIAL UND VERFAHREN ZUR BEHANDLUNG VON FLÜCHTIGEN ORGANISCHEN VERBINDUNGEN ENTHALTENDEN GASFÖRMIGEN MEDIEN
MATERIAL AND METHOD FOR TREATING GASEOUS MEDIA CONTAINING VOLATILE ORGANIC COMPOUNDS

(30) Priorité: 27.04.1999 FR 9905321
(43) Date de publication de la demande: 17.04.2002
(73) Titulaire: Rasar Holding N.V., Willemstad, Curaçao (AN)
(72) Inventeur: DREAN, Henri, Louis, F-75016 Paris (FR)
(74) Mandataire: Welch, Andreas
(86) Numéro de dépôt international: PCT/FR2000/001080
(87) Numéro de publication internationale: WO 2000/064577

(56) Documents cités:
- EP-A- 0 608 539
- WO-A-98/39093
- FR-A- 2 758 551
- FR-A- 2 767 645
- US-A- 3 960 771
- DATABASE WPI Section Ch, Week 199014 Derwent Publications Ltd., London, GB; Class D13, AN 1990-102517 XP002128196 & JP 02 052040 A (SUMITOMO HEAVY IND LTD), 21 février 1990 (1990-02-21)

## Description

L'invention concerne une matière pour le traitement de milieux gazeux contenant des composés organiques volatils, tels que de l'éthylène, ainsi qu'un procédé de traitement de milieux gazeux utilisant cette matière.

L'invention concerne également un procédé pour l'obtention d'une telle matière.

Cette matière et le procédé de traitement associé trouvent notamment application pour le traitement d'atmosphères de conservation de matières vivantes, notamment dans des réfrigérateurs ou des chambres froides.

La maturation des matières vivantes génère des composés organiques volatils, comme l'éthylène, certains d'entre eux provoquant l'auto-catalyse de la maturation. Par ailleurs, ces composés sont à l'origine de mauvaises odeurs et sont généralement générateurs de micro-organismes et de matières polluantes telles que des bactéries, moisissures et levures. Ils sont donc néfastes à la bonne conservation des matières vivantes puisqu'ils peuvent provoquer des dégradations biologiques nuisant à leur conservation, et donc à la santé des consommateurs.

Ces composés sont très légers et peuvent donc circuler facilement par les systèmes de ventilation ou de conditionnement.

Dans les systèmes de conservation connus, les atmosphères ne font l'objet d'aucun traitement particulier, avec tous les risques sanitaires qui en découlent.

L'invention a pour but de pallier ces inconvénients en proposant une matière pour le traitement de milieux gazeux contenant des composés organiques volatils et un procédé de traitement grâce à cette matière permettant de transformer chimiquement les composés organiques volatils en gaz inoffensifs, la structure de cette matière rendant ce procédé de traitement particulièrement efficace.

Ainsi, l'invention concerne une matière pour le traitement de milieux gazeux comportant des composés organiques volatils, cette matière poreuse présentant une capacité d'adsorption d'environ 20 à 30 % par rapport à son poids sec et comportant environ 47 à 52 % en poids d'une structure composite de silicium et de carbone, environ 12 à 20 %, en poids de carbone, environ 5 à 7% en poids d'hydroxyle et environ 1 à 2 % en poids d'oxygène.

De préférence, cette matière comporte dans un volume périphérique correspondant à sensiblement un tiers du volume total de la matière, environ 75 à 85 % de porosités dont la dimension est comprise entre 10 et 50 Å et, dans le volume central restant, environ 80 à 90% de cavités dont la dimension est comprise entre environ 200 Å et 2 µm.

De préférence, la surface spécifique de la matière selon l'invention est comprise entre 1200 et 2200 m²/g.

La matière peut avantageusement comporter environ 20% en poids d'oxydes d'alumine et environ 5% en poids d'iodures.

Par ailleurs, l'humidité relative de cette matière est avantageusement inférieure à 2 % en poids par rapport au poids sec de la matière.

L'invention concerne également un procédé 'de traitement d'un milieu gazeux contenant des composés organiques volatils, consistant à amener un flux dudit milieu gazeux sur une matière poreuse selon l'invention, pour provoquer l'adsorption de ce flux qui pénètre dans les porosités et les cavités de la matière, puis l'absorption dudit flux au cours de laquelle se produit une réaction chimique entre les composés organiques volatils dudit flux et la matière elle-même pour transformer les composés organiques volatils en gaz non toxiques, notamment CO₂ et/ou SO₂.

Le procédé selon l'invention est d'autant plus efficace que la matière poreuse selon l'invention présente un nombre de porosités et de cavités très élevé qui permet la diffusion du flux gazeux dans toute la matière qui présente une surface spécifique importante. La transformation chimique du flux gazeux est favorisée par le temps de contact relativement long entre le flux gazeux et la matière lors de la traversée de celle-ci par le flux.

Ainsi, le procédé de traitement selon l'invention assure un temps de contact entre le flux gazeux et la matière qui est compris entre 0,08 et 0,12 secondes.

L'invention concerne également un dispositif et un procédé pour l'obtention de la matière de traitement de milieux gazeux selon l'invention.

Ce procédé d'obtention consiste à :
- préparer un constituant de base du type argileux comprenant environ 30 % en poids d'argile dont la granulométrie est supérieure à 180 µm et environ 70 % en poids d'argile dont la granulométrie est comprise entre 10 et 20 µm,
- imprégner ce constituant de base avec une solution aqueuse comprenant environ 10 % en volume d'acide acétique, entre 5 et 10 % en volume d'acide citrique et entre 15 et 20 % en volume de peroxyde d'hydrogène, le volume de la solution étant sensiblement égal au volume du constituant de base,
- réaliser un pré-traitement du constituant de base imprégné de ladite solution en le malaxant selon une première vitesse déterminée, pour réaliser une structure poreuse,
- mélanger, sous une pression comprise entre 2 et 10 bars, le constituant pré-traité avec un liquide acidifié et à fort pouvoir oxydant, selon une deuxième vitesse inférieure à la première, pour faire pénétrer le liquide dans le constituant pré-traité et former un gel, la quantité de constituant pré-traité étant comprise entre 42 et 48 % du volume total mélangé, tandis que la quantité de liquide est comprise entre 58 et 52 % du volume total mélangé,
- malaxer ledit gel avec des produits complémentaires comprenant une solution à fort pouvoir oxydo-réducteur qui représente environ 10 % du volume total, un mélange de carbone et d'alumine représentant environ 12 à 15 % du volume total et du sulfate de calcium représentant environ 2 % du volume total,
- sécher le mélange obtenu par un traitement par ondes ultrasonores de la matière brassée et transférée linéairement et
- presser la matière séchée sous une pression comprise entre 8 et 10 bars.

De préférence, le procédé selon l'invention est mis en oeuvre de façon continue.

De préférence, le procédé consiste également à chauffer le constituant de base imprégné de solution aqueuse, lors du pré-traitement, à une température comprise entre 200 et 250°C.

Egalement, le procédé selon l'invention, consiste à émettre avantageusement des ondes ultrasonores, lors de ce pré-traitement, selon une puissance unitaire de 2000 watts et avec une amplitude de 15 à 30 µm.

Le chauffage et le traitement par ondes ultrasonores contribuent à réaliser une structure poreuse.

De préférence, lors du pré-traitement, le procédé consiste à réaliser un autre malaxage à une troisième vitesse inférieure aux première et deuxième vitesses, pour agrandir les cavités et porosités de la structure obtenue.

Le procédé selon l'invention consiste avantageusement à filtrer le liquide résultant du pré-traitement du constituant de base pré-imprégné.

Le liquide associé au constituant pré-traité comporte, de préférence, environ 10 % en volume d'une solution à fort pouvoir oxydant.

Le constituant pré-traité et le liquide sont avantageusement mélangés en étant chauffés à une température comprise entre 90 et 120°C.

Le malaxage du gel et des produits complémentaires s'effectue avantageusement à une température comprise entre 70°C et 80°C.

Le traitement par ondes ultrasonores, pour sécher le mélange, peut avantageusement être effectué sur une longueur de 20 à 30 cm, sous une puissance volumétrique de 3 à 5000 watts, une amplitude de 15 à 60 µm et une fréquence d'environ 20 MHz.

Par ailleurs, le séchage de la matière s'effectue, de façon préférée, sous une dépression de 120 à 150 mbars et à une température comprise entre 90 et 100°C.

Enfin, le procédé selon l'invention comporte avantageusement une étape finale d'extrudage de la matière.

Un dispositif pour la mise en oeuvre du procédé d'obtention selon l'invention particulièrement comprend :
- un imprégnateur comprenant un premier malaxeur tournant à une vitesse comprise entre 1200 et 1400 tours/min pour former un premier mélange,
- un premier réacteur comprenant un deuxième malaxeur tournant à une vitesse comprise entre 800 et 1000 tours/min pour réaliser un brassage sous une pression comprise entre 2 et 10 bars, afin d'obtenir un deuxième mélange du type gel,
- un deuxième réacteur comprenant un malaxeur pour réaliser un troisième mélange,
- un dispositif assurant le transfert linéaire dudit troisième mélange et au moins un dispositif ultrasonore délivrant une puissance de 3 à 5000 watts, sur au moins une partie de la trajectoire dudit troisième mélange et
- un dispositif d'extrudage sous forte pression.

De préférence, l'imprégnateur du dispositif selon l'invention comprend un dispositif de chauffage à une température comprise entre 200 et 250°C, ainsi qu'un dispositif d'émission d'ondes ultrasonores.

A cet imprégnateur, est avantageusement associé un dispositif de filtration du liquide évacué de l'imprégnateur.

De préférence, l'imprégnateur comporte un autre malaxeur tournant à une vitesse comprise entre 500 et 800 tours/min.

Le premier réacteur comprend avantageusement un dispositif de chauffage à une température comprise entre 90 et 120°C.

Le deuxième réacteur comprend avantageusement un dispositif de chauffage à une température comprise entre 70 et 80°C.

Enfin, le dispositif de transfert linéaire du deuxième réacteur est avantageusement constitué de bivis dont la vitesse de rotation est comprise entre 5 et 150 tours/min.

Enfin, le dispositif d'extrudage comprend de préférence une vis à pas variable soumettant la matière issue du deuxième réacteur à une pression comprise entre 8 et 10 bars.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation de l'invention et sur lesquels :
- la figure 1 est une vue schématique en coupe du dispositif d'obtention de la matière de traitement de milieux gazeux selon l'invention,
- la figure 2 est une vue agrandie en coupe du pré-imprégnateur illustré à la figure 1,
- la figure 3 est une vue agrandie des premier et deuxième réacteurs illustrés à la figure 1,
- la figure 4 est un diagramme montrant l'évolution de la pression et de la viscosité dans le premier réacteur illustré à la figure 1 et à la figure 3,
- la figure 5 est une vue en perspective d'un morceau de matière selon l'invention pour le traitement de milieux gazeux et
- la figure 6 est une vue en coupe selon VI-VI de la figure 5.

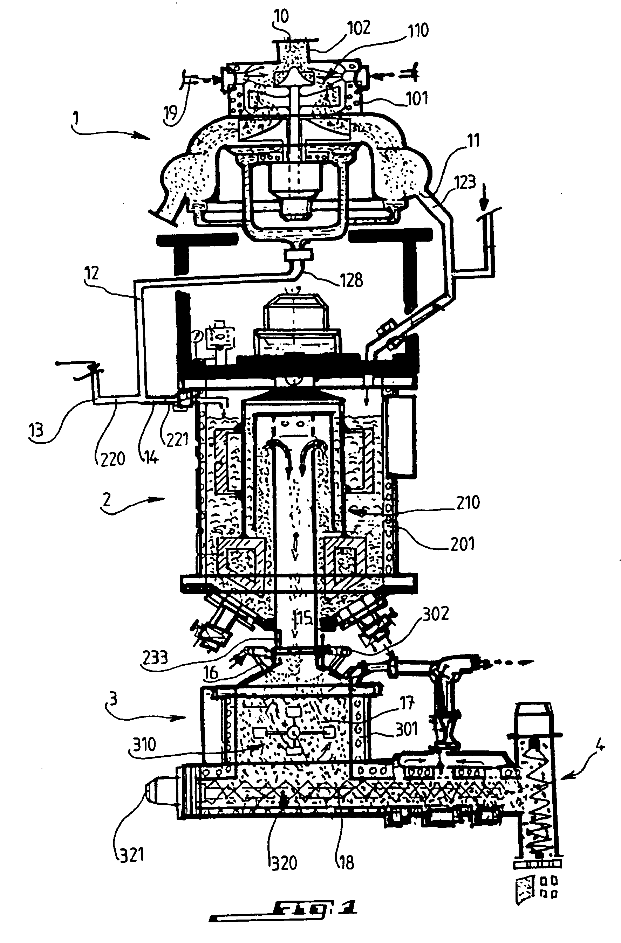

En référence à la figure 1, un dispositif pour l'obtention d'une matière destinée au traitement d'un milieu gazeux comporte, de façon générale, un imprégnateur 1 qui permet d'imprégner le constituant de base de cette matière avec une solution aqueuse et de réaliser un pré-traitement pour obtenir une structure poreuse, un premier réacteur 2 pour former un gel à partir du constituant de base pré-traité et dans lequel se produit des réactions physico-chimiques et enfin, un deuxième réacteur 3 permettant de sécher le mélange obtenu du premier réacteur et qui se termine par un dispositif 4 d'extrusion et de formage du mélange sortant du deuxième réacteur.

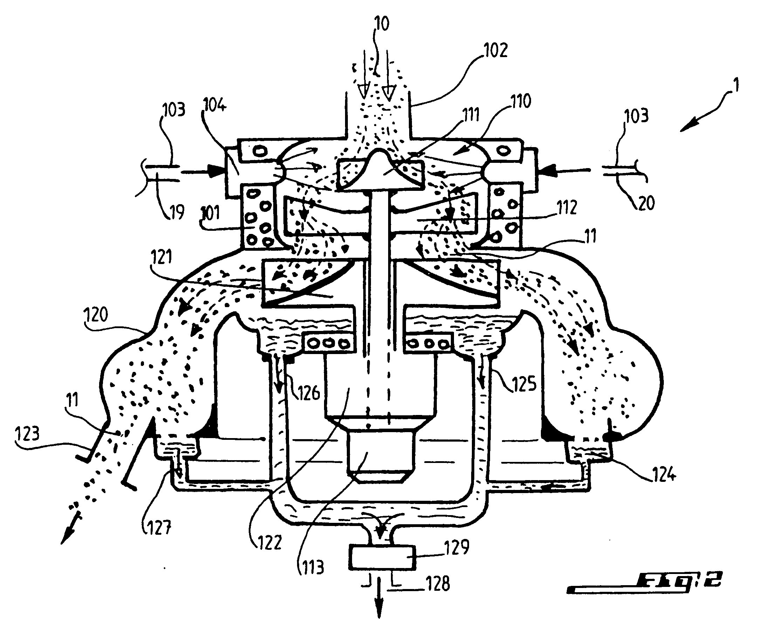

La figure 2 illustre l'imprégnateur 1, lequel est constitué d'une enveloppe 101, de préférence chauffante à une température comprise entre 200 et 250°C, dans laquelle peut être introduit le constituant de base 10 de la matière à obtenir, par un conduit 102.

Dans cette enveloppe 101, peut également être introduit un liquide 19, par exemple au moyen de buses d'injection 103.

Ce constituant de base est du type argileux et comprend environ 30% en poids d'argile dont la granulométrie est supérieure à 180µm et environ 70% en poids d'argile dont la granulométrie est comprise entre 10 et 20µm.

Le liquide 19 est une solution aqueuse comprenant en volume environ 10% d'acide acétique, 5 à 10% d'acide citrique et 15 à 20% de peroxyde d'hydrogène.

L'introduction de la matière 10 et du liquide 19 est réglée de telle sorte que le volume de solution aqueuse et le volume de constituant de base introduits dans l'enveloppe 101 sont sensiblement égaux.

Le dispositif 1 comprend, dans l'enveloppe 101, un premier malaxeur 110 comprenant une aube 111 et une aube 112, entraînées par l'intermédiaire du moto-réducteur 113. De préférence, la vitesse de rotation des aubes 111 et 112 est comprise entre 1200 et 1400 tours/min.

Ce malaxeur 110 brasse le constituant de base 10 et la solution aqueuse 19, la forme en cloche de l'aube 111 imprimant une vitesse périphérique importante au mélange 11.

Ainsi, dans l'enceinte 101, le constituant de base est sensibilisé chimiquement par la solution aqueuse et ses assemblages moléculaires sont mis en contrainte mécanique sur l'aube 111, du fait de sa très grande vitesse. Ceci facilite la décohésion des atomes métalliques du constituant de base.

Cette décohésion est favorisée par le chauffage de l'enceinte 101 ainsi que par l'action mécanique complémentaire des ondes ultrasonores émises par les moyens 104.

De préférence, ces moyens 104 d'émission d'ondes ultrasonores ont une puissance unitaire de 2000 watts et une amplitude de 15 à 30µm et ces émissions sont centrées sur la partie médiane de l'aube 111.

Ainsi, dans l'enceinte 101, le constituant de base, allégé des atomes métalliques, se restructure en assemblages légers de grande porosité avec un nombre important de cavités et de porosités, favorisées par le traitement par ondes ultrasonores. L'aube 112 permet de finaliser le réaménagement moléculaire des cavités et porosités formées dans ce premier mélange et de les agrandir.

L'imprégnateur 1 comporte une autre enveloppe 120 dans laquelle est prévue une aube 121 entraînée en rotation par un motoréducteur 122, notamment à une vitesse comprise entre 500 et 800 tours/min.

Cette aube 121 assure la sortie périphérique du mélange 11 au niveau du conduit 123.

L'aube 121 permet une certaine dispersion du mélange mais surtout, imprime aux assemblages moléculaires des contraintes de liaison moins importantes. Ce relâchement de structure provoque un agrandissement des porosités et cavités et favorise leur imprégnation grâce à une diffusion au coeur de la matière pré-imprégnée.

Le liquide plus léger que le mélange est récupéré au niveau des conduits 124, 125, 126 et 127. Ces conduits aboutissent tous au circuit d'évacuation 128.

Sur le circuit d'évacuation 128, est prévu un dispositif de filtration 129 qui assure l'épuration des atomes métalliques récupérés par séparation isotopique.

En effet, le constituant de base à base d'argile contient dans sa constitution atomique des atomes métalliques, essentiellement du fer, de l'aluminium, du chrome, du manganèse et du nickel, qu'il est souhaitable de séparer des assemblages moléculaires pour lesquels il est recherché une très grande aptitude à s'ouvrir en porosités et cavités.

En revenant à la figure 1, le mélange 11 issu du pré-imprégnateur 1 est introduit dans le premier réacteur 2 par le conduit 123.

Le liquide 12 provenant du circuit d'évacuation 128 de l'imprégnateur 1 est également introduit dans le premier réacteur 2, avec une solution 13 à fort pouvoir oxydant amené par le conduit 220. Le liquide 14 qui résulte de ce mélange est introduit dans le premier réacteur 2 par le conduit 221.

La solution 13 à fort pouvoir oxydant représente environ 10% du volume total du liquide 14 introduit dans le premier réacteur 2. Le liquide 12 issu de l'imprégnateur 1 est un liquide acidifié.

Par ailleurs, parmi les matières introduites dans le premier réacteur 2, le mélange 11 représente 42 à 48% du volume total, tandis que le liquide 14 représente entre 58 et 52% du volume total.

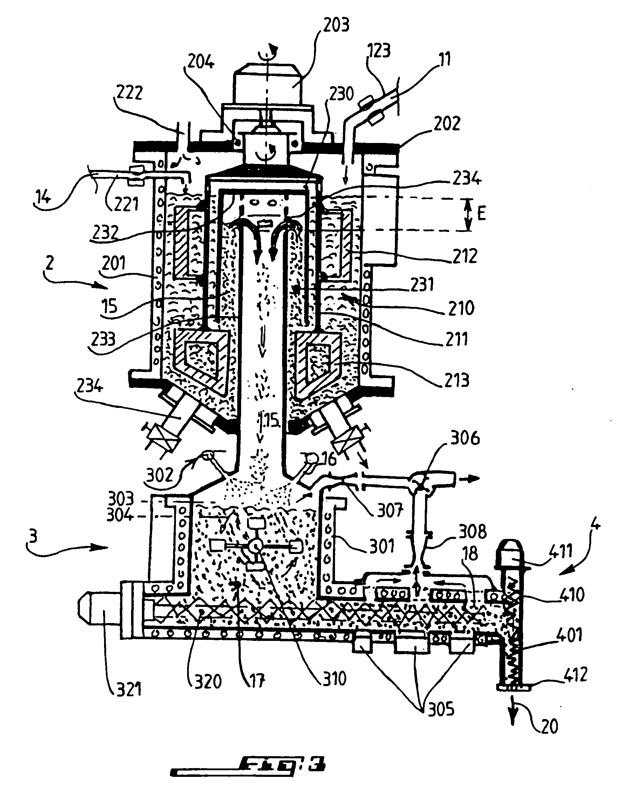

On se réfère maintenant à la figure 3 qui illustre les premier et deuxième réacteurs 2 et 3.

Le premier réacteur 2 comporte une enveloppe 201 sensiblement cylindrique qui est fermée à sa partie supérieure par un couvercle 202.

L'enveloppe 201 comporte, de préférence, des moyens de chauffage à une température comprise entre 90 et 120°C.

Le couvercle 202 supporte un moto-réducteur 203, lequel entraîne en rotation le malaxeur 210.

L'enveloppe 201 est sous pression, grâce à une arrivée de gaz sous pression par le conduit 222 et à des moyens d'étanchéité 204 prévus entre le moteur 203 et le couvercle 202. La pression dans l'enceinte 201 est de préférence comprise entre 2 et 10 bars.

Le malaxeur 210 comporte un rotor 211 en forme de cloche sur lequel sont fixées, dans sa partie haute, des aubes 212 de brassage à effet cisaille et, dans sa partie inférieure, des aubes 213 profilées.

A l'intérieur du rotor 211, sont ménagées une chambre extérieure 230 et une chambre intérieure 231, séparées par un élément en cloche 232.

Un.tube d'évacuation 233 est prévu à l'intérieur de la chambre intérieure 231. Le tube 233, l'élément en cloche 232 et les chambres intérieure et extérieure sont tous concentriques.

Le mélange 11 et le liquide 14 introduits dans l'enceinte 201 sont mélangés vigoureusement par les aubes 212 et 213 entraînées par le moteur 203. Le mélange 15 obtenu se constitue progressivement en formant un gel dont la viscosité augmente dans la chambre interne 231.

La vitesse du malaxeur 210 est comprise entre 800 et 1000 tours/min.

Le mélange 15 présent dans la chambre interne 231 se déverse ensuite dans le tube d'évacuation 233, au travers des lumières de déversement 234 que présente le tube dans sa partie supérieure.

Le gel 15 obtenu est ainsi transféré par gravité vers le deuxième réacteur 3.

Le premier réacteur 2 comporte également un dispositif de vidange 234 à sa partie basse.

La pressurisation de la chambre extérieure 230 est régulée par un niveau de consigne résultant de l'écart de niveau de matière entre la chambre extérieure 230 et la chambre intérieure 231, matérialisé par E.

La pression régule le temps de la réaction chimique, la viscosité caractérisant le transfert de la matière en transit de la chambre extérieure à la chambre intérieure.

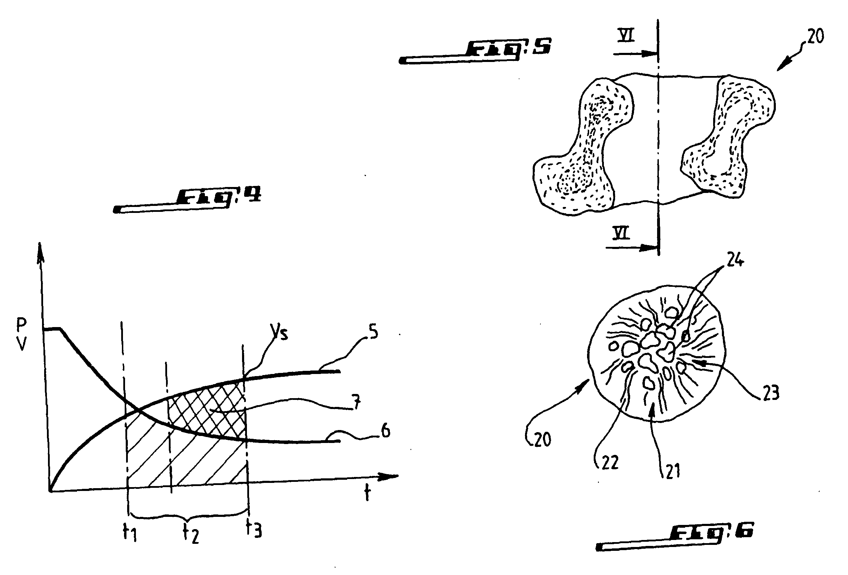

On se réfère à la figure 4 qui est un diagramme montrant schématiquement, avec la courbe 5, l'évolution de la pression à l'intérieur du premier réacteur 1 et, avec la courbe 6, l'évolution de la viscosité dans ce même réacteur.

Le temps de transit de la chambre extérieure 230 à la sortie de la chambre intérieure 231 est défini par l'intervalle de temps [t1, t3], tandis que le temps de transit dans la chambre interne 231 est défini par l'intervalle de temps [t2, t3].

L'intégrale d'écart entre les courbes 5 et 6 pour le temps de transit dans la chambre interne est représenté par la surface grisée 7. Cette intégrale définit l'indicateur de paramétrage essentiel du système de commande associé au premier réacteur 2 et qui assure les réglages de pressurisation, de vitesse du malaxeur 210, des temps de transit (t1, t3) et (t2, t3) ainsi que de la viscosité Vₛ à la sortie de la chambre intérieure 231, avant déversement dans le tube 233.

Ce type de commande caractérise le fonctionnement en continu du premier réacteur 1, pour assurer la qualité de la matière produite.

On revient encore à la figure 3 pour décrire le deuxième réacteur 3.

Celui-ci comporte une cuve 301 dans laquelle débouche le tube d'évacuation 233 du gel 15 formé dans le premier réacteur 2.

A la partie supérieure de la cuve 301, sont également introduits des produits complémentaires 16, de préférence par l'intermédiaire d'un tore d'introduction 302.

Ces produits complémentaires 16 comprennent une solution à fort pouvoir oxydo-réducteur représentant environ 10% du volume total introduit dans le deuxième réacteur 3, un mélange de carbone et d'alumine représentant environ 12 à 15% du volume total introduit et du sulfate de calcium représentant environ 2% du volume total introduit dans le deuxième réacteur 3.

A l'intérieur de la cuve 301, le deuxième réacteur comporte un malaxeur 310.

La cuve 301 est de préférence chauffante, sa température de chauffage étant comprise entre 70 et 80°C.

Le malaxeur 310 mélange le gel 15 et les produits complémentaires 16, le mélange 17 obtenu étant entraîné par une bivis 320 qui est prévue à la partie inférieure de la cuve 301 du deuxième réacteur 3.

Cette bivis dont les sens de rotation sont inverses est entraînée par un moto-réducteur 321 alimenté par un variateur de vitesses (non représenté) qui permet d'entraîner la bivis 320 à une vitesse comprise entre 5 et 150 tours/min, en fonction des niveaux haut 303 et bas 304 du mélange 17 dans le réacteur 3.

La bivis 320 transfère le mélange 17 selon une trajectoire linéaire allant de la gauche vers la droite sur la figure 3.

Le deuxième réacteur 2 comporte également des moyens 305 d'émission d'ondes ultrasonores, du type sonotrode.

De préférence, ces moyens 305 délivrent une puissance volumétrique de 3 à 5000 watts, sur une longueur 20 à 30cm, sous une amplitude de 15 à 60µm et avec une fréquence voisine de 20Mhz.

La température du mélange 17 est alors comprise entre 90 et 100°C.

Lors de ce traitement ultrasonique, les cavités et porosités présentes dans le mélange 17 sont vidées et asséchées par diffusion dans la structure microporeuse, ce qui provoque une ré-imprégnation de la matière 18 obtenue par diffusion microscopique du liquide d'imprégnation progressivement constitué depuis le pré-imprégnateur 1 jusqu'aux moyens d'émission d'ondes ultrasonores 305.

Cet assèchement est favorisé par la mise en dépression de l'intérieur de l'enceinte 301, cette dépression étant comprise entre 120 et 150 mbars.

Cette dépression peut notamment être obtenue par moto-ventilateur volumétrique 306 aspirant les gaz à l'intérieur de l'enceinte 301 au moyen des tuyères 307, 308, prévues pour accélérer les vitesses de circulation des gaz extraits.

Enfin, le dispositif selon l'invention comporte un dispositif 4 d'extrudage.

Ce dispositif 4 comporte une enceinte 401 dans laquelle est prévue une vis 410 qui est entraînée en rotation par un moto-réducteur 411.

Ainsi, la matière 18 issue du deuxième réacteur 3 est pressée sur la vis 410 à pas variable pour atteindre une pression comprise entre 8 et 10bars. Le débit de la matière 20 sortant du dispositif d'extrudage 4 est compris entre 14 et 20 kg/min.

Le dispositif 4 comporte de préférence une filière de formage 412 pour que la matière 20 soit obtenue sous forme de granulés ou de plaques selon le type de filière de formage utilisé.

La matière obtenue en sortie du dispositif d'extrudage 4 est schématiquement représentée aux figures 5 et 6.

La matière 20 illustrée aux figures 5 et 6 est une matière poreuse qui comporte environ 47 à 52% en poids d'une structure composite de silicium et de carbone, environ 12 à 20% en poids de carbone, environ 5 à 7% en poids d'hydroxyle et environ 1 à 2% en poids d'oxygène.

Cette matière peut également comporter environ 20% en poids d'oxydes d'alumine et environ 5% en poids d'iodures.

Comme l'illustre la figure 6, cette matière comporte dans un volume périphérique 21 correspondant à sensiblement un tiers du volume total de la matière, environ 75 à 85% de porosités 22 dont la dimension est comprise entre 10 et 20Å et, dans le volume central 23 restant, environ 80 à 90% de cavités 24 dont la dimension est comprise entre environ 200Å et 2µm.

Ainsi, les porosités 22 débouchant dans les cavités 24 du volume central, un flux gazeux pourra pénétrer dans la matière à travers les porosités 22 qui constituent des chemins de circulation, jusqu'aux cavités 24, dans lequelles le flux gazeux peut tourbillonner.

La matière 20 permet donc d'adsorber un flux gazeux important qui circule par les porosités 22 et les cavités 24, puis d'absorber ces gaz en transformant chimiquement les composés organiques volatils présents dans ce flux gazeux.

De façon générale, ces composés organiques volatils sont transformés en gaz non toxiques tels que SO₂ et/ou CO₂.

En particulier, cette matière permet de convertir l'éthylène présent dans un flux gazeux en dioxyde de carbone. Des essais déjà réalisés ont permis de mettre en évidence l'efficacité de la matière poreuse selon l'invention.

L'efficacité du traitement des composés organiques volatils est d'autant plus grande que la matière poreuse selon l'invention présente une surface spécifique également importante et qui est notamment comprise entre 1200 et 2200 m²/g.

Par ailleurs, la multiplicité des porosités et des cavités à l'intérieur de la matière poreuse a pour conséquence un temps de contact relativement long entre le flux gazeux et la matière poreuse lorsque ce flux la traverse. Ce temps de contact peut notamment être compris entre 0,08 et 0,12 sec.

Enfin, l'humidité relative de la matière poreuse est avantageusement inférieure à 2% sur le poids sec de la matière.

Cette matière présente une capacité d'absorption de l'ordre de 20 à 30% par rapport à son poids sec et convient particulièrement au traitement de l'éthylène, des dichlorures d'éthylène, des oxydes d'éthylène, des aldéhydes et des aminés. Elle permet également de neutraliser les odeurs, notamment celles émanant des hydrogènes sulfurés et des sulfures organiques.

Les signes de référence insérés après les caractéristiques techniques figurant dans les revendications ont pour seul but de faciliter la compréhension de ces dernières et ne sauraient en limiter la portée.

## Revendications

1. Matière pour le traitement de milieu gazeux comportant des composés organiques volatils, cette matière poreuse présentant une capacité d'adsorption de 20 à 30% par rapport à son poids sec et comportant 47 à 52% en poids d'une structure composite de silicium et de carbone, 12 à 20% en poids de carbone, 5 à 7% en poids d'hydroxyle et 1 à 2% en poids d'oxygène.

2. Matière selon la revendication 1 comportant dans un volume périphérique (21) correspondant à sensiblement un tiers du volume total de la matière, environ 75 à 85% de porosités (22) dont la dimension est comprise entre 10 et 50Å et, dans le volume central (23) restant, environ 80 à 90% de cavités (24) dont la dimension est comprise entre environ 200Å et 2µm.

3. Matière selon la revendication 1 ou 2 dont la surface spécifique est comprise entre 1200 et 2200 m²/g.

4. Matière selon l'une des revendications 1 à 3, comportant environ 20% en poids d'oxydes d'alumine et environ 5% en poids d'iodures.

5. Matière selon l'une des revendications 1 à 4 dont l'humidité relative est inférieure à 2% sur son poids sec.

6. Procédé pour fabriquer la matière poreuse selon l'une des revendications 1 à 5, consistant à:
- préparer un constituant de base (10) du type argileux comprenant 30% en poids d'argile dont la granulométrie est supérieure à 180µm et 70% en poids d'argile dont la granulométrie est comprise entre 10 et 20µm,
- imprégner ce constituant de base (10) avec une solution aqueuse (19) comprenant 10% en volume d'acide acétique, entre 5 et 10% en volume d'acide citrique et entre 15 et 20% en volume de peroxyde, le volume de la solution (19) étant sensiblement égal au volume du constituant de base (10),
- réaliser un pré-traitement du constituant de base (10) imprégné de ladite solution (19) en le malaxant selon une première vitesse déterminée, pour réaliser une structure poreuse,
- mélanger, sous une pression comprise entre 2 et 10 bars, le constituant pré-traité (11) avec un liquide (14) acidifié et à fort pouvoir oxydant, selon une deuxième vitesse inférieure à la première, pour faire pénétrer le liquide (14) dans le constituant pré-traité (11) et former un gel (15), la quantité de constituant pré-traité (11) étant comprise entre 42 et 48% du volume total mélangé, tandis que la quantité de liquide (14) est comprise entre 58 et 52% du volume total melangé,
- malaxer ledit gel (15) avec des produits complémentaires (16) comprenant une solution à fort pouvoir oxydo-réducteur qui représente 10% du volume total, un mélange de carbone et d'alumine représentant 12 à 15% du volume total et du sulfate de calcium représentant environ 2% du volume total,
- sécher le mélange obtenu par un traitement par ondes ultrasonores de la matière brassée et transférée linéairement, et
- presser la matière (18) séchée sous une pression comprise entre 8 et 10 bars.

7. Procédé selon la revendication 6 mis en oeuvre de façon continue.

8. Procédé selon la revendication 6 ou 7, consistant également à chauffer le constituant de base (10) imprégné de solution aqueuse (19), lors du pré-traitement, à une température comprise entre 200 et 250°C.

9. Procédé selon l'une des revendications 6 à 8, consistant à émettre des ondes ultrasonores, lors du prétraitement, selon une puissance unitaire de 2000 watts et avec une amplitude de 15 à 30µm.

10. Procédé selon l'une des revendications 6 à 9, consistant à réaliser, lors du pré-traitement, un autre malaxage à une troisième vitesse inférieure aux première et deuxième vitesses, pour agrandir les cavités et porosités de la structure obtenue.

11. Procédé selon l'une des revendications 6 à 10, consistant à filtrer le liquide (12) résultant du prétraitement du constituant de base (10) pré-imprégné.

12. Procédé selon l'une des revendications 6 à 11, dans lequel le liquide acidifié associé au constituant prétraité (11) comporte environ 10% en volume d'une solution à fort pouvoir oxydant.

13. Procédé selon l'une des revendications 6 à 12, dans lequel le constituant pré-traité (11) et le liquide (14) sont mélangés en étant chauffés à une température comprise entre 90 et 120°C.

14. Procédé selon l'une des revendications 6 à 13, dans lequel le malaxage du gel (15) et des produits complémentaires (16) s'effectue à une température comprise entre 70 et 80°C.

15. Procédé selon l'une des revendications 6 à 14, dans lequel le traitement par ondes ultrasonores, pour sécher le mélange (17), est effectué sur une longueur de 20 à 30 cm, sous une puissance volumétrique de 3 à 5000 watts, une amplitude de 15 à 60µm et une fréquence d'environ 20 Mhz.

16. Procédé selon l'une des revendications 6 à 15, dans lequel le séchage de la matière (18) s'effectue sous une dépression de 120 à 150 mbars et à une température comprise entre 90 et 100°C.

17. Procédé selon l'une des revendications 6 à 16, comportant une étape finale d'extrudage de la matière (18).

18. Utilisation de la matière selon l'une quelconque des revendications 1 à 5 pour le traitement d'un milieu gazeux contenant des composés organiques volatils.

19. Utilisation de la matière selon la revendication 18, dans laquelle le traitement du milieu gazeux contenant des composés organiques volatils, consiste à amener un flux dudit milieu gazeux sur ladite matière pour provoquer l'adsorption de ce flux qui pénètre dans les porosités (22) et les cavités (24) de la matière (20), puis l'absorption dudit flux au cours de laquelle se produit une réaction chimique entre les composés organiques volatils dudit flux et la matière elle-même pour transformer les composés organiques volatils en gaz non toxiques.

20. Utilisation selon la revendication 19, dans lequel le temps de contact entre le flux gazeux et la matière est compris entre 0,08 et 0,12 sec.

## Claims

1. Material for the treatment of gaseous medium that includes volatile organic compounds, this porous material having an adsorptivity of 20 to 30% relative to its dry weight and comprising 47 to 52% by weight of a silicon/carbon composite structure, 12 to 20% by weight of carbon, 5 to 7% by weight of hydroxyl and 1 to 2% by weight of oxygen.

2. Material according to Claim 1, having, in a peripheral volume (21) corresponding to approximately one third of the total volume of the material, about 75 to 85% of the pores (22), the size of which is between 10 and 50 Å, and, in the remaining central volume (23), about 80 to 90% of the cavities (24), the size of which is between about 200 Å and 2 µm.

3. Material according to Claim 1 or 2, the specific surface area of which is between 1200 and 2200 m²/g.

4. Material according to one of Claims 1 to 3, comprising about 20% by weight of aluminium oxides and about 5% by weight of iodides.

5. Material according to one of Claims 1 to 4, the relative moisture content of which is less than 2% of its dry weight.

6. Process for manufacturing the porous material according to one of Claims 1 to 5, consisting in:
- preparing a base constituent (10) of the argilaceous type comprising 30% by weight of clay having a particle size of greater than 180 µm and 70% by weight of clay having a particle size of between 10 and 20 µm;
- impregnating this base constituent (10) with an aqueous solution (19) comprising 10% acetic acid by volume, between 5 and 10% citric acid by volume and between 15 and 20% peroxide by volume, the volume of the solution (19) being approximately equal to the volume of the base constituent (10);
- carrying out a pretreatment on the base constituent (10) impregnated with said solution (19), by mixing it at a specified first speed, in order to produce a porous structure;
- mixing, at a pressure of between 2 and 10 bar, the pretreated constituent (11) with an acidified liquid (14) of high oxidizing power, at a second speed, lower than the first, in order to make the liquid (14) penetrate into the pretreated constituent (11) and to form a gel (15), the quantity of pretreated constituent (11) being between 42 and 48% of the total volume mixed, while the quantity of liquid (14) is between 58 and 52% of the total volume mixed;
- blending said gel (15) with complementary products (16), comprising a solution of high oxidation-reduction power, representing 10% of the total volume, a mixture of carbon and alumina, representing 12 to 15% of the total volume, and calcium sulphate, representing about 2% of the total volume;
- drying the mixture obtained by an ultrasonic treatment of the blended and linearly transferred material; and
- pressing the dried material (18) at a pressure of between 8 and 10 bar.

7. Process according to Claim 6, carried out continuously.

8. Process according to Claim 6 or 7, which also consists in heating the base constituent (10) impregnated with the aqueous solution (19), during the pretreatment, to a temperature of between 200 and 250°C.

9. Process according to one of Claims 6 to 8, consisting, during the pretreatment, in generating ultrasonic waves with a unit power of 2000 watts and with an amplitude of 15 to 30 µm.

10. Process according to one of Claims 6 to 9, which consists, during the pretreatment, in carrying out another blending operation at a third speed, lower than the first and second speeds, in order to enlarge the cavities and pores of the structure obtained.

11. Process according to one of Claims 6 to 10, which consists in filtering the liquid (12) resulting from the pretreatment of the preimpregnated base constituent (10).

12. Process according to one of Claims 6 to 11, in which the acidified liquid associated with the pretreated constituent (11) comprises about 10% by volume of a solution of high oxidizing power.

13. Process according to one of Claims 6 to 12, in which the pretreated constituent (11) and the liquid (14) are mixed together, while being heated to a temperature of between 90 and 120°C.

14. Process according to one of Claims 6 to 13, in which the gel (15) and the complementary products (16) are blended together at a temperature of between 70 and 80°C.

15. Process according to one of Claims 6 to 14, in which the ultrasonic treatment, for drying the mixture (17), is carried out over a length of 20 to 30 cm, with a volumetric power of 3 to 5000 watts, an amplitude of 15 to 60 µm and a frequency of about 20 MHz.

16. Process according to one of Claims 6 to 15, in which the drying of the material (18) is carried out under a vacuum of 120 to 150 mbar and at a temperature of between 90 and 100°C.

17. Process according to one of Claims 6 to 16, which includes a final step of extruding the material (18).

18. Use of the material according to any one of Claims 1 to 5 for the treatment of a gaseous medium containing volatile organic compounds.

19. Use of the material according to Claim 18, in which the treatment of the gaseous medium containing volatile organic compounds consists in bringing a stream of said gaseous medium onto said material in order to cause adsorption of this stream, which penetrates into the pores (22) and the cavities (24) of the material (20), followed by adsorption of said stream, during which a chemical reaction takes place between the volatile organic compounds of said stream and the material itself, so as to convert the volatile organic compounds into non-toxic gases.

20. Use according to Claim 19, in which the contact time between the gas stream and the material is between 0.08 and 0.12 seconds.

## Patentansprüche

1. Stoff für die Behandlung von gasförmigen Medien umfassend flüchtige organische Verbindungen, wobei dieser poröse Stoff eine Adsorptionsfähigkeit von 20 bis 30 % bezogen auf sein Trockengewicht aufweist und 47 bis 52 Gew.-% einer Verbundstruktur aus Silizium und Kohlenstoff, 12 bis 20 Gew.-% Kohlenstoff, 5 bis 7 Gew.-% Hydroxyl und 1 bis 2 Gew.-% Sauerstoff umfasst.

2. Stoff nach Anspruch 1, umfassend in einem Umfangsvolumen (21), das im Wesentlichen einem Drittel des Gesamtvolumens des Stoffes entspricht, ungefähr 75 bis 85 % Porositäten (22), deren Abmessung zwischen 10 und 50 Å beträgt, und im übrigen Zentralvolumen (23) ungefähr 80 bis 90 % Hohlräume (24), deren Abmessung zwischen ungefähr 200 Å und 2 µm beträgt.

3. Stoff nach Anspruch 1 oder 2, dessen spezifische Fläche zwischen 1200 und 2200 m²/g beträgt.

4. Stoff nach einem der Ansprüche 1 bis 3, umfassend ungefähr 20 Gew.-% Aluminiumoxide und ungefähr 5 Gew.-% Jodide.

5. Stoff nach einem der Ansprüche 1 bis 4, dessen relative Feuchtigkeit geringer als 2 % bezogen auf sein Trockengewicht ist.

6. Verfahren zur Herstellung des porösen Stoffes nach einem der Ansprüche 1 bis 5, darin bestehend:
- einen Basisbestandteil (10) vom Typ Ton herzustellen, der 30 Gew.-% Ton, dessen Granulometrie größer als 180 µm ist, und 70 Gew.-% Ton enthält, dessen Granulometrie zwischen 10 und 20 µm beträgt,
- diesen Basisbestandteil (10) mit einer wässrigen Lösung (19) zu imprägnieren, umfassend 10 Vol.-% Essigsäure, zwischen 5 und 10 Vol.-% Zitronensäure und zwischen 15 und 20 Vol.-% Peroxid, wobei das Volumen der Lösung (19) im Wesentlichen gleich dem Volumen des Basisbestandteils (10) ist,
- eine Vorbehandlung des Basisbestandteils (10), der mit der Lösung (19) imprägniert ist, durchzuführen, wobei er nach einer ersten bestimmten Geschwindigkeit gemischt wird, um eine poröse Struktur herzustellen,
- unter einem Druck zwischen 2 und 10 bar den vorbehandelten Bestandteil (11) mit einer sauer gemachten Flüssigkeit (14) mit stark oxydierender Wirkung nach einer zweiten Geschwindigkeit, die geringer als die erste ist, zu mischen, um die Flüssigkeit (14) in den vorbehandelten Bestandteil (11) eindringen zu lassen und ein Gel (15) zu bilden, wobei die Menge an vorbehandeltem Bestandteil (11) zwischen 42 und 48 % des Gesamtmischvolumens beträgt, während die Flüssigkeitsmenge (14) zwischen 58 und 52 % des Gesamtmischvolumens beträgt,
- das Gel (15) mit Ergänzungsprodukten (16) zu mischen, umfassend eine Lösung mit stark die Oxydation reduzierenden Wirkung, die 10 % des Gesamtvolumens darstellt, eine Mischung von Kohlenstoff und Aluminiumoxid, die 12 bis 15 % des Gesamtvolumens darstellt, und Kalziumsulfat, das ungefähr 2 % des Gesamtvolumens darstellt,
- die erhaltene Mischung durch eine Behandlung mit Ultraschallwellen des durchgemischten und linear weitergeleiteten Stoffes zu trocknen,
- den getrockneten Stoff (18) unter einem Druck zwischen 8 und 10 bar zu pressen.

7. Verfahren nach Anspruch 6, das kontinuierlich eingesetzt wird.

8. Verfahren nach Anspruch 6 oder 7, das auch darin besteht, den Basisbestandteil (10), der mit einer wässrigen Lösung (19) imprägniert ist, bei der Vorbehandlung auf eine Temperatur zwischen 200 und 250 °C zu erhitzen.

9. Verfahren nach einem der Ansprüche 6 bis 8, darin bestehend, Ultraschallwellen bei der Vorbehandlung nach einer Einheitsleistung von 2000 Watt und mit einer Amplitude von 15 bis 30 µm zu emittieren.

10. Verfahren nach einem der Ansprüche 6 bis 9, darin bestehend, bei der Vorbehandlung ein weiteres Mischen mit einer dritten Geschwindigkeit, die geringer als die erste und die zweite Geschwindigkeit ist, durchzuführen, um die Hohlräume und Porositäten der erhaltenen Struktur zu vergrößern.

11. Verfahren nach einem der Ansprüche 6 bis 10, darin bestehend, die aus der Vorbehandlung des vorimprägnierten Basisbestandteils (10) entstandene Flüssigkeit (12) zu filtern.

12. Verfahren nach einem der Ansprüche 6 bis 11, bei dem die sauer gemachte Flüssigkeit, die mit dem vorbehandelten Bestandteil (11) verbunden wird, ungefähr 10 Vol.-% einer Lösung mit stark oxydierender Wirkung umfasst.

13. Verfahren nach einem der Ansprüche 6 bis 12, bei dem der vorbehandelte Bestandteil (11) und die Flüssigkeit (14) gemischt werden, wobei sie auf eine Temperatur zwischen 90 und 120 °C erhitzt werden.

14. Verfahren nach einem der Ansprüche 6 bis 13, bei dem das Mischen des Gels (15) und der Ergänzungsprodukte (16) bei einer Temperatur zwischen 70 und 80 °C erfolgt.

15. Verfahren nach einem der Ansprüche 6 bis 14, bei dem die Behandlung mit Ultraschallwellen zum Trocknen der Mischung (17) auf einer Länge von 20 bis 30 cm unter einer Volumen bezogenen Leistung von 3 bis 5000 Watt, mit einer Amplitude von 15 bis 60 µm und bei einer Frequenz von ungefähr 20 MHz erfolgt.

16. Verfahren nach einem der Ansprüche 6 bis 15, bei dem das Trocknen des Stoffes (18) unter einem Unterdruck von 120 bis 150 mbar und bei einer Temperatur zwischen 90 und 100 °C erfolgt.

17. Verfahren nach einem der Ansprüche 6 bis 16, umfassend einen Endschritt des Extrudierens des Stoffes (18).

18. Verwendung des Stoffes nach einem der Ansprüche 1 bis 5 für die Behandlung eines gasförmigen Mediums, das flüchtige organische Verbindungen enthält.

19. Verwendung des Stoffes nach Anspruch 18, bei der die Behandlung des gasförmigen Mediums, das flüchtige organische Verbindungen enthält, darin besteht, einen Strom des gasförmigen Mediums auf den Stoff zu leiten, um die Adsorption dieses Stroms, der in die Porositäten (22) und die Hohlräume (24) des Stoffes (20) eindringt, dann die Absorption des Stroms, bei der eine chemische Reaktion zwischen den flüchtigen organischen Verbindungen des Stroms und dem Stoff selbst entsteht, hervorzurufen, um die flüchtigen organischen Verbindungen in nicht toxische Gase umzuwandeln.

20. Verwendung nach Anspruch 19, bei der die Kontaktzeit zwischen dem gasförmigen Strom und dem Stoff zwischen 0,08 und 0,12 Sekunden beträgt.
